# EUROPEAN PATENT SPECIFICATION

(11) **EP 4 461 623 B1**
(45) Date of publication and mention of the grant of the patent: **25.06.2025**
(21) Application number: 24168828.2
(22) Date of filing: 05.04.2024
(51) Int. Cl.: B62D 15/02, B60W 30/12

(54) **VEHICLE CONTROL APPARATUS**
FAHRZEUGSTEUERUNGSVORRICHTUNG
APPAREIL DE COMMANDE DE VÉHICULE

(30) Priority: 10.05.2023 JP 2023077695
(43) Date of publication of application: 13.11.2024
(73) Proprietor: Suzuki Motor Corporation, Shizuoka 432-8611 (JP)
(72) Inventor: HARA, Masato, Hamamatsu-shi 432-8611 (JP)
(74) Representative: Plasseraud IP

(56) References cited:
- WO-A1-2022/059536
- US-A1- 2018 170 424
- US-A1- 2018 170 430
- US-A1- 2020 156 698
- US-A1- 2023 034 588

## Description

### BACKGROUND OF THE INVENTION

### Field of the Invention

Embodiments of the present invention relate to a vehicle control apparatus.

### Description of the Related Art

A known electric power steering apparatus causes its electric motor to generate steering assist force to be applied to a steering mechanism on the basis of torque applied to a steering wheel, for example. This electric power steering apparatus includes: a motor control means for driving and controlling the electric motor, a power-supply voltage detection means for detecting voltage of a power supply that supplies electric power to the electric motor, and a gain-control adjustment means for adjusting a gain control of the electric motor driven by the motor control means on the basis of the voltage of the power supply detected by the power-supply voltage detection means.

[Patent Document 1] JP 2001-001917 A

Document US 2018/170424 A1 shows a vehicle control apparatus comprising: an electric power steering configured to support steering of a vehicle and be able to perform torque control; a current-position acquisition unit configured to acquire a current position of the vehicle in a traffic lane where the vehicle is currently traveling; and a target-position control unit configured to perform steering control of the electric power steering in such a manner that the vehicle is caused to run from the current position to a target position and maintains a current traffic lane.

In order to reduce the driver's burden and support safe driving, various driving support functions have been put into practical use, and these functions cause the vehicle to semi-automatically perform some of recognitions, decisions, and operations formerly performed by the driver. Aspects of the driving assistance functions include adaptive cruise control (ACC) and lane keeping assist (LKA).

The LKA is a system that automatically controls the steering angle of the steered wheels (for example, front wheels) to bring the vehicle to the target position. This system controls the motor torque of the electric power steering in such a manner that the actual steering angle of the steered wheels matches the target steering angle. The motor torque is also referred to as steering torque. In other words, the system for automatically controlling the steering angle determines the steering torque as a control input according to the steering angle.

When the steering wheel is turned from left to right or from right to left, the steering angle does not substantially change immediately before or after the turning of the steering wheel in reverse (i.e., in the counter direction). In the following description, reverse turning of the steering wheel or steered wheels from left to right or from right to left is collectively referred to as "reverse turning of the steering", as appropriate. Furthermore, in the following description, "reverse turning" not only refers to a full turn of the steering wheel so as to avoid danger or to perform reverse parking, but also refers to turning the steered wheels in reverse when the vehicle slowly moves from side to side along the center of the lane, as in LKA mode.

On the other hand, in reverse turning of the steering, the steering angle is turned from left to right or from right to left, and thus, the steering torque of the electric power steering changes significantly. Furthermore, the steering generally has hysteresis characteristic due to viscous damping and friction. In other words, at the time of reverse turning of the steering, a sufficiently large steering torque for overcoming the hysteresis characteristic of the steering is required.

Thus, in the system that automatically controls the steering angle, there is a concern that the steering torque may be insufficient immediately after reverse turning of the steering. Shortage of the steering torque causes a delay in follow-up control of the actual steering angle with respect to the target steering angle. Furthermore, this delay in the follow-up control may affect the steering feeling of the driver who holds the steering wheel.

### SUMMARY OF THE INVENTION

In view of the above-described circumstances, an object of the present invention is to provide a vehicle control apparatus that can shorten a response delay at the time of reverse turning of the steering in steering control and improve steering feeling of the driver.

To achieve the above-mentioned object, a vehicle control apparatus according to an aspect of the present invention includes: an electric power steering configured to support steering of a vehicle and be able to perform torque control; a current-position acquisition unit configured to acquire a current position of the vehicle in a traffic lane where the vehicle is currently traveling; and a target-position control unit configured to perform steering control of the electric power steering in such a manner that the vehicle is caused to run from the current position to a target position and maintains a current traffic lane, wherein, by definitions that a first phase P1 is a predetermined period including a span immediately after reverse turning of steering is determined in the steering control and a second phase P2 is a period during which steering-turn is performed and does not overlap the first phase P1, weighting in follow-up control from the current position to the target position is larger in the first phase P1 than in the second phase P2.

It is preferable that the vehicle control apparatus according to the aspect of the present invention further includes an angle sensor configured to detect an actual steering angle, wherein: the target-position control unit is configured to calculate a target steering angle for performing the steering control and cause the electric power steering to perform torque control in such a manner that the target steering angle is achieved; the steering control is feedback control; and the weighting is based on a difference between the target steering angle and the actual steering angle in the feedback control.

In the vehicle control apparatus according to the aspect of the present invention, the weighting in the first phase P1 preferably increases more as a steering angular speed becomes faster.

In the vehicle control apparatus according to the aspect of the present invention, the first phase P1 is preferably at least one of: a period from a time at which the target steering angle is determined to have been turned from left to right until a time at which the actual steering angle is determined to have been turned from left to right; and a period from a time at which the target steering angle is determined to have been turned from right to left until a time at which the actual steering angle is determined to have been turned from right to left.

In the vehicle control apparatus according to the aspect of the present invention, the first phase P1 is preferably longer as the steering angular speed is faster, and is preferably equal to or shorter than at least one of: a period from a time at which the target steering angle is determined to have been turned from left to right until a time at which the actual steering angle is determined to have been turned from left to right; and a period from a time at which the target steering angle is determined to have been turned from right to left until a time at which the actual steering angle is determined to have been turned from right to left.

In the vehicle control apparatus according to the aspect of the present invention, the weighting in the second phase P2 is preferably different between rightward steering turn and leftward steering turn.

In the vehicle control apparatus according to the aspect of the present invention, the weighting in the second phase P2 is preferably determined by calculating a predetermined ratio from a difference between the target steering angle and the actual steering angle.

### EFFECTS OF THE INVENTION

The present invention provides a vehicle control apparatus that can shorten a response delay at the time of reverse turning of the steering in steering control and improve steering feeling of the driver.

### BRIEF DESCRIPTION OF THE DRAWINGS

In the accompanying drawings:
Fig. 1 is a schematic diagram illustrating an overall configuration of a vehicle control apparatus according to one embodiment of the present invention;
Fig. 2 is a schematic graph illustrating temporal change in the target steering angle and the actual steering angle and correlation between both angles in the vehicle control apparatus according to the embodiment of the present invention;
Fig. 3 is a schematic diagram illustrating relationship between the target steering angle and the steering torque in the vehicle control apparatus according to the embodiment of the present invention;
Fig. 4 is a schematic diagram illustrating the relationship between the target steering angle and the steering torque at different steering angular speeds in the vehicle control apparatus according to the embodiment of the present invention; and
Fig. 5 is a flowchart illustrating processing of determining a control input including weighting setting to be executed by a target-position control unit in the vehicle control apparatus according to the embodiment of the present invention.

### DETAILED DESCRIPTION

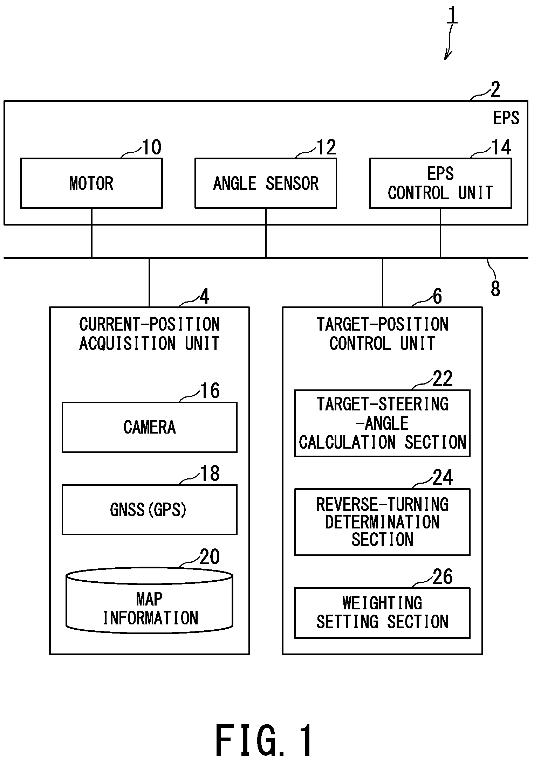

Hereinbelow, a vehicle control apparatus according to the present embodiment will be described by referring to Fig. 1 to Fig. 5.

Hereinafter, a description will be given of a case where the vehicle control apparatus according to the present embodiment is applied to a vehicle having at least one driving support function. The driving support function in the present embodiment includes at least a function that automatically steers the vehicle, i.e., controls the lateral position (left-right position) of the vehicle to perform driving control, as exemplified by the LKA. Further, another driving support function of automatically controlling either or both of the steering and speed of the vehicle, such as ACC, may also be used in combination when performing driving control. In this case, it is assumed that the driver probably holds the steering wheel only and does not make any active steering intervention.

Furthermore, in terms of type of the vehicle, the vehicle control apparatus according to the present embodiment can be applied not only to engine vehicles but also to other vehicles such as electric vehicles, hybrid vehicles, and fuel cell vehicles.

Fig. 1 is a schematic diagram illustrating an overall configuration of a vehicle control apparatus 1 according to the embodiment of the present invention.

As shown in Fig. 1, the vehicle control apparatus 1 according to the present embodiment includes: an electric power steering 2 that supports steering and can perform torque control, a current-position acquisition unit 4 configured to acquire the current position of the own vehicle in the lane where the own vehicle is currently traveling, and a target-position control unit 6 configured to perform steering control of the electric power steering 2 in such a manner that the vehicle is caused to run from the current position to the target position and thereby maintains the current traffic lane. The electric power steering 2, the current-position acquisition unit 4, and the target-position control unit 6 are communicably connected to each other via an in-vehicle network 8. The in-vehicle network 8 is a bus-type network that uses a CAN (Controller Area Network) as its communication protocol, for example.

The electric power steering 2 (hereinafter abbreviated as "the EPS 2") generates the steering torque, i.e., the torque for steering the vehicular steered wheels, which are usually or exclusively the front wheels (not shown), so as to perform steering. The EPS 2 includes a motor 10 configured to generate the steering torque, an angle sensor 12 configured to detect the actual steering angle of the steered wheels, and an EPS control unit 14 configured to control the torque of the motor 10.

For example, the motor 10 applies force to a rack and pinion mechanism (not shown) of the steering system of the vehicle so as to change the direction of the steered wheels, i.e., change the turning angle of the steered wheels of the vehicle. The turning angle is the angle between the rotation plane perpendicular to the rotation centerline of the steered wheels and the front-and-rear direction of the vehicle. Additionally, in terms of steering type, the vehicle control apparatus 1 according to the present embodiment is applicable not only to the rack and pinion type but also to other types such as a circulating ball type.

The angle sensor 12 detects the direction and size of the turning angle of the steered wheels as the actual steering angle.

The EPS control unit 14 calculates an electric-current command value (hereinafter referred to as "the motor-current command value") that enables the motor 10 to generate the required steering torque on the basis of the command signal indicative of the steering torque as the control input from the target-position control unit 6. The EPS control unit 14 then drives the motor 10 via a drive circuit (not shown) on the basis of this motor-current command value.

The current-position acquisition unit 4 is a camera 16, for example. The camera 16 images the front of the vehicle. The camera 16 includes an image processer (not shown) that recognizes road marking lines from the generated images and detects the current position in the lane where the own vehicle is currently traveling. The camera 16 is a digital camera that uses a solid-state image senor such as a CCD (Charge Coupled Device) and a CMOS (Complementary Metal Oxide Semiconductor). The camera 16 is attached to the windshield, the back surface of the rearview mirror, or the front end of the vehicle in order to image the front, for example.

Instead of or in addition to the camera 16, the current-position acquisition unit 4 may be provided with: a GNSS (Global Navigation Satellite System) 18 that can obtain highly accurate position information by using a plurality of satellites including a GPS (Global Positioning System); and highly accurate map information 20 with latitude and longitude information that matches the accurate positioning acquired by the GNSS 18. The GNSS 18 is preferably a relative positioning system in order to acquire highly accurate position information, such as position information within ± several centimeters (cm). The GNSS 18 is more preferably configured as an RTK (Real Time Kinematic) system. The current-position acquisition unit 4 uses the GNSS 18 and the map information 20 to acquire the current position information, that is, the position information of the own vehicle in the lane where the own vehicle is currently running.

The target-position control unit 6 performs the steering control of the EPS 2, which causes the vehicle to follow the lateral position as the target position on the basis of the current position information of the vehicle outputted from the current-position acquisition unit 4. Specifically, the target-position control unit 6 calculates the steering torque required for performing the steering control that causes the own vehicle to follow the target position being updated every moment from the current position, and outputs the obtained steering torque as a command signal to the EPS control unit 14. The target position is, for example, the centerline of the traffic lane for the vehicle in the right-and-left direction, and is the target to be followed in the steering control. This steering control is also referred to as "lane keeping control" or "lane departure prevention control".

The target-position control unit 6 includes a target-steering-angle calculation section 22 configured to calculate the target steering angle that is necessary for calculating the steering torque; a steering reverse-turning determination section 24 (hereinafter abbreviated as "the reverse-turning determination section 24"), and a weighting setting section 26. Note that instead of having the camera 16 provided with the above-described image processor, the target-position control unit 6 may include the above-described image processor. When the target-position control unit 6 includes the image processor, the camera 16 outputs the image data obtained by imaging the front of the vehicle to the target-position control unit 6. The target-position control unit 6 causes the image processor to process the image data outputted from the camera 16 so as to detect the current position information.

In addition, each of the EPS 2, the current-position acquisition unit 4, and the target-position control unit 6 can be configured as a computer that includes a processor such as a CPU and a memory such as a ROM (Read Only Memory), a RAM (Random Access Memory), and an HDD (Hard Disk Drive). In this case, for example, the respective functions of the target-position control unit 6, the target-steering-angle calculation section 22, the reverse-turning determination section 24, and the weighting setting section 26 can be implemented by causing the processor to execute predetermined programs stored in the memory. These functions can also be achieved by hardware such as an ASIC (Application Specific Integrated Circuit) and an FPGA (Field-Programmable Gate Array) instead of the above-described software processing.

Part or all of the target-position control unit 6 and its sections may be integrated into the EPS 2 or the current-position acquisition unit 4 in such a manner that these components are configured as a single computer. In this case, for example, the EPS 2 may receive a command signal indicating the target steering angle instead of the steering torque from the target-position control unit 6, and the EPS 2 may, instead of the target-position control unit 6, calculate the steering torque for performing the steering control that causes the vehicle to follow the target position from the current position. In addition, instead of the target-position control unit 6, the EPS 2 may receive the current position information from the current-position acquisition unit 4 and calculate the steering torque for performing the steering control that causes the vehicle to follow the target position from the current position.

The target-steering-angle calculation section 22 calculates and determines the target steering angle on the basis of the target position and the current position of the own vehicle in order to perform the steering control of the EPS 2. Various known methods in this technical field can be used for calculating the target steering angle. The target-steering-angle calculation section 22 transmits the calculated target steering angle to the target-position control unit 6. The target-position control unit 6 calculates the steering torque required for obtaining the target steering angle (hereinafter referred to as "the target steering torque") at predetermined calculation cycles on the basis of the target steering angle transmitted from the target-steering-angle calculation section 22 and the actual steering angle outputted from the angle sensor 12. The target-position control unit 6 outputs the calculated target steering torque as a command signal to the EPS control unit 14 of the EPS 2. Further, the target-position control unit 6 causes the EPS control unit 14 to generate the target steering torque on the motor 10. In other words, the target-position control unit 6 causes the EPS 2 to perform the torque control such that the target steering angle can be achieved.

Additionally, the steering control of the EPS 2 to be performed by the target-position control unit 6 is usually feedback control. When the steering control of the EPS 2 is the feedback control, for example, the desired value is the target steering angle, the input, i.e., control input is a command signal indicating the target steering torque, and the control target is the EPS 2. Specifically, the control target is the motor 10, and the output is the actual steering angle measured by the angle sensor 12. Although various known algorithms can be applied as the feedback control algorithm, the steering control of the EPS 2 is preferably PID (Proportional-Integral-Derivative) control because it is a simple control law and is easy to apply.

On the basis of the target steering angle outputted from the target-steering-angle calculation section 22 and the actual steering angle outputted from the angle sensor 12, the reverse-turning determination section 24 determines whether the steering is turned in reverse or not. If an extreme value of the target steering angle is detected, the reverse-turning determination section 24 determines that the direction of the target steering angle (i.e., the sign indicating either leftward or rightward) is turned in reverse. If an extreme value of the actual steering angle is detected, the reverse-turning determination section 24 determines that the steering is turned and the direction of the actual steering angle (i.e., the sign indicating either leftward or rightward) is turned in reverse. For each of the target steering angle and the actual steering angle, the reverse-turning determination section 24 determines whether the direction of steering angle is turned from the right to the left or from the left to the right. The target-position control unit 6 reads in the determination result from the reverse-turning determination section 24, and then determines the turning state of the steering.

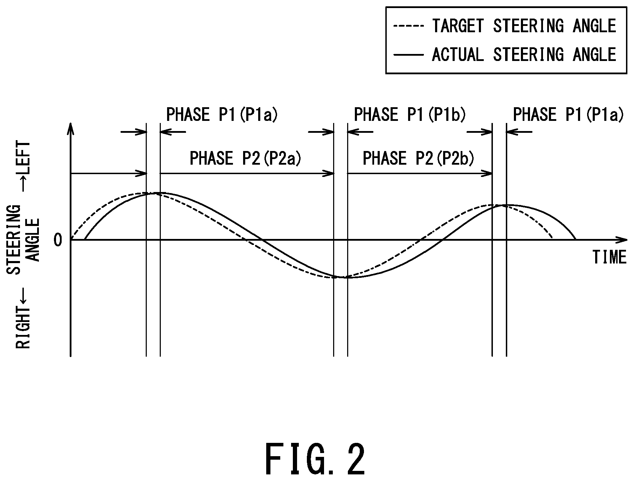

Fig. 2 is a schematic graph illustrating temporal change in the target steering angle and the actual steering angle and correlation between both angles in the vehicle control apparatus 1 according to the embodiment of the present invention.

In Fig. 2, the horizontal axis indicates time, and the vertical axis indicates the steering angle, where the leftward rotation angle is defined as a positive value while the rightward rotation angle is defined as a negative value. As shown in Fig. 2, in the steering control of the EPS 2, steering-turn including reverse turning of the steering is performed from time to time in order to cause the vehicle to follow the lateral position as the target position during running.

In the following, a phase P1 is defined as a predetermined period after it is determined that the steering is turned in reverse, including the short span immediately after this determination (i.e., affirmation timing). A phase P2 is defined as a period during which steering-turn is performed and does not overlap the phase P1. In the following description, the phase P1 is referred to as "the first phase P1" and the phase P2 is referred to as "the second phase P2", as appropriate. The term "steering-turn" means to change the course of the vehicle under the lane keeping control or the lane departure prevention control, while the driver does not involve operation of the steering wheel.

The above-described expression "it is determined that the steering is turned in reverse" means that the direction of the target steering angle is determined to have been turned from left to right or from right to left.

In the lane keeping control and/or the lane departure prevention control, immediately before reverse turning of the steering, i.e., immediately before the phase P1, the vehicle is usually in the state where the current position is close to the target position and control of following the target position from the current position is almost achieved. In other words, in the steering control of the electric power steering, the steering torque required to follow the target position from the current position is small.

In the steering control, due to viscous damping and friction, there is a hysteresis characteristic between the steering torque required for steering the steered wheels and the actual steering angle of the steered wheels, which are the front wheels in many cases. At the time of reverse turning of the steering, i.e., in the phase P1, a large steering torque is required to overcome this hysteresis characteristic.

If the steering torque is insufficient immediately after reverse turning of the steering, i.e., in the phase P1, the difference between the target position and the current position becomes large in the subsequent steering-turn. If the difference between the target position and the current position becomes large, there will be a significant delay in following the target position from the current position.

Thus, the target-position control unit 6 gives a larger weighting to the control of following the target position from the current position in the phase P1 than in the phase P2, and thereby increases the steering torque in the steering control of the EPS 2 even if the current position is close to the target position at the time of reverse turning of the steering. This weighting setting for the control of following the target position from the current position is performed by the weighting setting section 26. In the following description, the weighting for the control of following the target position from the current position is sometimes simply referred to as "the weighting".

The weighting setting section 26 sets the weighting to the control of following the target position from the current position of the vehicle when the target-position control unit 6 performs the steering control of the EPS 2. One of the roles of the weighting in the follow-up control is to increase the steering torque and thereby suppress excessive increase in the difference between the target position and the current position of the vehicle.

Specifically, the weighting setting section 26 sets the weighting in the phase P1 and the weighting in the phase P2. In addition, the weighting setting section 26 sets the period for setting the weighting, i.e., the respective periods of the phase P1 and the phase P2 on the basis of the target steering angle, the actual steering angle, and the determination results of the reverse-turning determination section 24. Each time when calculating the target steering torque at a predetermined calculation cycle, the target-position control unit 6 reads in the weightings having been set in the weighting setting section 26 and calculates the target steering torque. Thus, the target-position control unit 6 can acquire the desired target steering torque in the steering control of the EPS 2 by appropriately adjusting and setting the weighting of the follow-up control in the phase P1 and the phase P2.

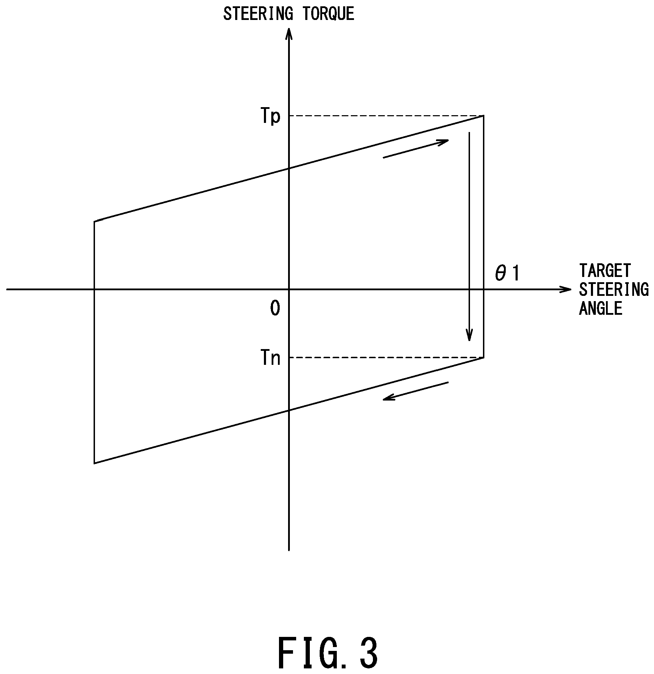

Fig. 3 is a schematic diagram illustrating relationship between the target steering angle and the steering torque in the vehicle control apparatus 1 according to the embodiment of the present invention.

In Fig. 3, the horizontal axis indicates the target steering angle in the torque control of the EPS 2, and the vertical axis indicates the steering torque required to achieve the target steering angle. With respect to the target steering angle, the leftward rotation angle is a positive value, and the rightward rotation angle is a negative value. As to the steering torque, the torque for turning the steered wheels leftward with respect to the traveling direction of the vehicle is a positive value, and the torque for turning the steered wheels rightward with respect to the traveling direction of the vehicle is a negative value.

As shown in Fig. 3, in the phase P1 in which the steering is turned from left to right along the arrow in the figure, despite the substantially unchanged target steering angle at θ1, the steering torque changes so rapidly from a positive value Tp to a negative value Tn. Thus, in order to shorten the delay in the control of following the target position from the current position in the steering control of the EPS 2, it is necessary to increase the steering torque in the phase P1. The vehicle control apparatus 1 according to the present embodiment shortens the delay in the control of following the target position from the current position by increasing the weighting and thereby increasing the steering torque necessary for the follow-up control in the phase P1 of the steering control of the EPS 2.

The target-position control unit 6 uses the weighting having been set by the weighting setting section 26 when calculating the target steering torque at predetermined calculation cycles. This weighting may be determined on the basis of the difference between the target steering angle and the actual steering angle in the feedback control. In other words, the weighting may be applied to the difference between the target steering angle and the actual steering angle in the feedback control or may be applied to the steering torque corresponding to the difference between the target steering angle and the actual steering angle in the feedback control. For example, the target-position control unit 6 stores a lookup table that defines the difference between the target steering angle and the actual steering angle and the relationship with the steering torque in advance. The target-position control unit 6 refers to this table, acquires the steering torque corresponding to the difference obtained by weighting the difference between the target steering angle and the actual steering angle, and sets the acquired steering torque as the target steering torque. Additionally or alternatively, the target-position control unit 6 refers to this table, acquires the steering torque corresponding to the difference between the target steering angle and the actual steering angle, and sets the torque obtained by weighting this acquired steering torque as the target steering torque.

In the vehicle control apparatus 1 according to the embodiment of the present invention, the weighting has a function to increase/decrease and maintain the target steering torque. Thus, for example, when the steering control of the EPS 2 is executed by the PID control, the weighting may be defined as weighting coefficients wp, wi, and wd by which the respective gain coefficients Kp, Ki, and Kd of the proportional term, the integral term, and the derivative term of the PID control are multiplied. Additionally or alternatively, the weighting may be defined as the respective gain coefficients Kp, Ki, and Kd.

As one example of making the weighting of the follow-up control larger in the phase P1 than in the phase P2, it can be considered as making only the weighting coefficient wp larger in the phase P1 than in the phase P2 among the weighting coefficients wp, wi, and wd. Not limited to this case, the weighting in the phase P1 may be made larger than in the phase P2 so as to increase the command signal as an input to the control target by adjusting wi and wd on the basis of the magnitude relationship between the weighting coefficients wp, wi, and wd, even if wp after the adjustment of wi and wd becomes equal to or smaller than wp before the adjustment of wi and wd.

In addition, the weighting may be defined as a correction control input that is added to the control input calculated by a PID controller, for example. Further, the weighting may be a combination of two or more of the correction control input, the gain coefficients, and the weighting coefficients in the PID control. In some cases, due to sudden disturbance or noise, the difference between the target steering angle and the actual steering angle becomes significantly large, and consequently the control input becomes excessively large. The target-position control unit 6 usually has a limiter function to avoid excessive input of the command signals into the EPS 2 in such a case. This limiter function suppresses sudden change in the steering angle by keeping the command signal within the range between the lower limit value and the upper limit value.

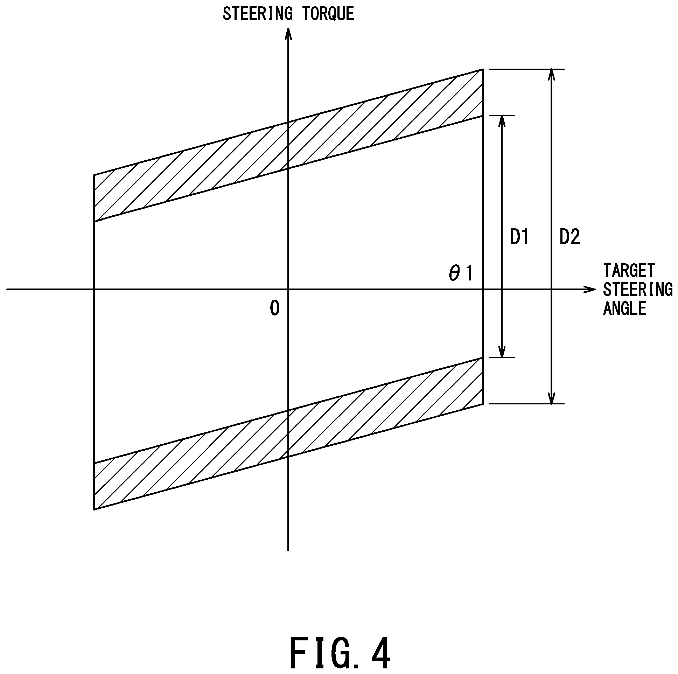

Fig. 4 is a schematic diagram illustrating the relationship between the target steering angle and the steering torque at different steering angular speeds in the vehicle control apparatus 1 according to the embodiment of the present invention. In Fig. 4, the horizontal axis, the vertical axis, the target steering angle, and the steering torque can be defined in the same manner as in Fig. 3.

As shown in Fig. 4, the faster the steering angular speed becomes, the larger the steering torque required to achieve a predetermined target steering angle (i.e., hatched region in Fig. 4) becomes. For example, when the steering is turned from left to right at the target steering angle θ1, the torque difference D2 in the case of having a large steering angular speed is larger than the torque difference D1 in the case of having a small steering angular speed. Thus, in the phase P1 that is a predetermined period including the span immediately after it is determined that the steering is turned in reverse, the faster the steering angular speed is, the larger the steering torque required to achieve the target steering angle becomes. For this reason, the weighting in the phase P1 may be increased more as the steering angular speed becomes faster. The weighting setting section 26 increases the weighting in the phase P1 more as the steering angular speed becomes faster, and thereby the target-position control unit 6 can increase the steering torque depending on the steering angular speed. Note that the steering angular speed is the value obtained by differentiating the target steering angle obtained in the target-steering-angle calculation section 22 with respect to time.

The weighting in the phase P1 is, for example, a compatible value or a design value determined through preliminary verification of vehicles to which the vehicle control apparatus 1 is applied. In other words, the weighting in the phase P1 is a value that reflects the characteristics of the vehicle, especially the hysteresis characteristic of the steering. The weighting in the phase P2 is a learned value that uses the compatible value or the design value as the initial value and changes through learning based on the control history accumulated through execution of the steering control, for example. The control history is the difference between the target steering angle and the actual steering angle, for example. Furthermore, the weighting in the phase P1 is maintained as long as the steering angular speed does not change during the same period of the phase P1. Contrastively, the weighting in the phase P2 is changed in some cases by learning even during the same period of the phase P2.

Next, a detailed description will be given of the periods during which the weighting is set, i.e., the phase P1 and the phase P2.

Returning to Fig. 2, the phase P1 may be at least one of: the period from the time at which the target steering angle is determined to have been turned from left to right until the time at which the actual steering angle is determined to have been turned from left to right; and the period from the time at which the target steering angle is determined to have been turned from right to left until the time at which the actual steering angle is determined to have been turned from right to left.

In this case, the phase P2 is at least one of: the period from the time at which the actual steering angle is determined to have been turned from left to right until the time at which the target steering angle is determined to have been turned from right to left; and the period from the time at which the actual steering angle is determined to have been turned from right to left until the time at which the target steering angle is determined to have been turned from left to right. Specifically defining the period of the phase P1 eliminates a situation where a large weighting is maintained during the phase P2, i.e., during periods excluding the phase P1. Thus, the target-position control unit 6 suppresses generation of excessive steering torque in the phase P2.

The phase P1 is followed by the phase P2. Thus, if the phase P1 is the period from the time at which the target steering angle is determined to have been turned from left to right until the time at which the actual steering angle is determined to have been turned from left to right, the subsequent phase P2 is correspondingly the period from the time at which the actual steering angle is determined to have been turned from left to right until the time at which the target steering angle is determined to have been turned from right to left.

If the phase P1 is the period from the time at which the target steering angle is determined to have been turned from right to left until the time at which the actual steering angle is determined to have been turned from right to left, the subsequent phase P2 is correspondingly the period from the time at which the actual steering angle is determined to have been turned from right to left until the time at which the target steering angle is determined to have been turned from left to right.

The phase P1 may be longer as the steering angular speed is faster, and may be equal to or shorter than at least one of: the period from the time at which the target steering angle is determined to have been turned from left to right until the time at which the actual steering angle is determined to have been turned from left to right; and the period from the time at which the target steering angle is determined to have been turned from right to left until the time at which the actual steering angle is determined to have been turned from right to left.

In the phase P1 as shown in Fig. 4, the faster the steering angular speed is, the larger the steering torque required to achieve the predetermined target steering angle in the steering control of the EPS 2 becomes. If the weighting is not increased as the steering angular speed becomes faster, it takes more time to achieve the effect when making the weighting in the phase P1 larger than in the phase P2, i.e., it takes more time to improve the followability of the actual steering angle with respect to the target steering angle. Thus, instead of increasing the weighting more as the steering angular speed becomes faster, the weighting setting section 26 lengthens the period of maintaining the weighting as the steering angular speed becomes faster. In this manner, the target-position control unit 6 allows the EPS 2 to exert the steering torque for improving the followability of the actual steering angle with respect to the target steering angle.

Even if the phase P1 ends and shifts to the phase P2 and the weighting becomes smaller after it is determined that the target steering angle is turned in reverse but before it is determined that the actual steering angle is turned in reverse, change in weighting is not immediately reflected in the followability of the actual steering angle with respect to the target steering angle.

Thus, the weighting setting section 26 sets the phase P1 as a period that is equal to or shorter than the period from the time at which the target steering angle is determined to have been turned in reverse until the time at which the actual steering angle is determined to have been turned in reverse. For example, the weighting setting section 26 sets the phase P1 as the period prior to this determination (i.e., affirmation) of the reverse turning of the actual steering angle. In this manner, the target-position control unit 6 allows the EPS 2 to exert the steering torque based on appropriate weighting at more appropriate timing.

As shown in Fig. 2, the phase P1 further includes a phase P1a and a phase P1b. The phase P1a is a predetermined period including the span immediately after it is determined that the target steering angle is turned from left to right. The phase P1b is a predetermined period including the span immediately after it is determined that the target steering angle is turned from right to left. The weighting may be different between the phase P1a and the phase P1b. In other words, the weighting in the phase P1 may be different between: a predetermined period including the span immediately after it is determined that the target steering angle is turned from left to right; and a predetermined period including the span immediately after it is determined that the target steering angle is turned from right to left. For example, the weighting W1a in the phase P1a and the weighting W1b in the phase P1b are different from each other. In this manner, in the case of turning of the steering from left to right or from right to left, even if the hysteresis characteristic in the phase P1a is different from the hysteresis characteristic in the phase P1b, the same reverse-turning response is achieved in both left and right directions.

As shown in Fig. 2, the phase P2 includes: a phase P2a that is an execution period of rightward steering-turn and does not overlap the phase P1a; and a phase P2b that is an execution period of leftward steering-turn and does not overlap the phase P1b. The weighting may be different between the phase P2a and the phase P2b. In other words, in the phase P2, the weighting for rightward steering-turn may be different from the weighting for leftward steering-turn. For example, the weighting W2a in the phase P2a and the weighting W2b in the phase P2b are set to have different values. In this manner, even if there is variation in responsiveness between leftward steering-turn and rightward steering-turn, the target-position control unit 6 improves the variation in the responsiveness by using different weighting for leftward steering-turn and rightward steering-turn. Note that variation in the responsiveness is due to various factors such as vehicle alignment, change in weight balance ascribable to distribution of vehicle-occupants and cargo, road surface conditions, and a wind direction.

The weighting in the phase P2 may be determined by calculating a predetermined ratio from the difference between the target steering angle and the actual steering angle. In the phase P2a, for example, when the difference between a certain target steering angle and the actual steering angle at that time is equal to or less than a predetermined threshold A, it is determined that change in vehicle characteristics such as progress of temporal change in alignment and/or disturbance caused by, e.g., road surface conditions and a wind direction is occurring during running, and new weighting W2a is set to improve the followability. In this case, the new weighting W2a can be determined by multiplying the currently set weighting W2a by the ratio (i.e., predetermined ratio) that is obtained by dividing the difference between the certain target steering angle and the actual steering angle at that time by the predetermined threshold A, for example.

In the phase P2b, for example, when the difference between a certain target steering angle and the actual steering angle at that time becomes equal to or larger than a predetermined threshold value A', it is determined that change in vehicle characteristics such as progress of temporal change in alignment and/or disturbance caused by, e.g., road surface conditions and a wind direction is occurring during running, and new weighting W2b is set to improve the followability. In this case, the new weighting W2b can be determined by multiplying the currently set weighting W2b by the ratio that is obtained by dividing the difference between the certain target steering angle and the actual steering angle at that time by the predetermined threshold value A', for example.

Accordingly, the target-position control unit 6 uses the weighting determined by calculating the predetermined ratio from the difference between the target steering angle and the actual steering angle to make the difference between the target steering angle and the actual steering angle almost the same between rightward steering-turn and leftward steering-turn, and thereby, further improves the left-right balance of the responsiveness.

Assuming that N is a positive integer in the following description, the difference between a certain target steering angle and the actual steering angle at that time in the phase P2a for the past N times may be stored as control history, and the predetermined threshold A can be defined as a value obtained by multiplying the average value of the control history by a predetermined magnification such as 1.1, for example. Similarly, the difference between a certain target steering angle and the actual steering angle at that time in the phase P2b for the past N times may be stored as control history, and the predetermined threshold A' can be defined as a value obtained by multiplying the average value of the control history by a predetermined magnification such as 1.1, for example.

In addition, when the weighting in the phase P2 is determined by calculating the predetermined ratio from the difference between the target steering angle and the actual steering angle, an integral value (i.e., time integral value) of the difference between the target steering angle and the actual steering angle may be used as the difference between the target steering angle and the actual steering angle. In the phase P2a, for example, when the integral value of the difference between the target steering angle and the actual steering angle becomes equal to or less than a predetermined threshold B, new weighting W2a is set to improve followability. In this case, the new weighting W2a can be calculated by: calculating the integral value of the difference between the target steering angle and the actual steering angle in the latest completed phase P2a as soon as the latest phase P2a is completed; and then multiplying the weighting W2a being set in the latest completed phase P2 by the ratio that is obtained by dividing the calculated integral value by the predetermined threshold B, for example. Even if the difference between the target steering angle and the actual steering angle becomes large temporarily due to sudden disturbance or noise, this negative effect can be reduced by using the integral value of the difference between the target steering angle and the actual steering angle.

In the phase P2b, for example, if the integral value of the difference between the target steering angle and the actual steering angle becomes equal to or larger than a predetermined threshold value B**'**, new weighting W2b is set to improve the followability. In this case, the new weighting W2b can be calculated by: calculating the integral value of the difference between the target steering angle and the actual steering angle in the latest completed phase P2b as soon as the latest phase P2b is completed; and then multiplying the weighting W2b being set in the latest completed phase P2 by the ratio that is obtained by dividing the calculated integral value by the predetermined threshold B', for example.

Thus, the target-position control unit 6 can further improve the balance of the responsiveness at the time of leftward steering-turn and rightward steering-turn by using the weighting that is determined by calculating the predetermined ratio from the integral value of the difference between the target steering angle and the actual steering angle.

As to the predetermined threshold B, the integral value of the difference between the target steering angle and the actual steering angle in the phase P2a for the past N times may be stored as the control history, and the predetermined threshold B can be defined as a value obtained by multiplying the average value of the control history by a predetermined magnification such as 1.1, for example.

As to the predetermined threshold B', the integral value of the difference between the target steering angle and the actual steering angle in the phase P2b for the past N times may be stored as the control history, and the predetermined threshold B' can be defined as a value obtained by multiplying the average value of the control history by a predetermined magnification such as 1.1, for example.

Next, a description will be given of the processing of calculating the control input for the EPS 2 to be executed by the target-position control unit 6 of the vehicle control apparatus 1 according to the embodiment of the present invention. Specifically, the control input is a command signal from the target-position control unit 6 to the EPS control unit 14 of the EPS 2, and is information regarding the target steering torque.

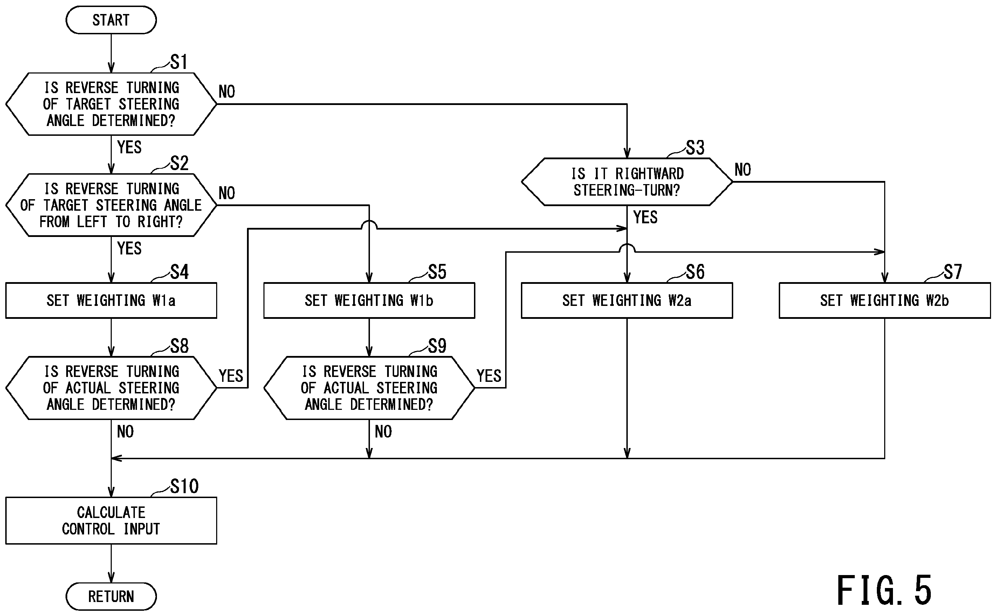

Fig. 5 is a flowchart illustrating the processing of determining the control input including the weighting setting to be executed by the target-position control unit 6 in the vehicle control apparatus 1 according to the embodiment of the present invention.

The target-position control unit 6 repeatedly calculates the control input by following the routine shown in Fig. 5 at predetermined cycles. For facilitating understanding in Fig. 5, the phase P1 is assumed to be the period from the time at which the target steering angle is determined to have been turned in reverse until the time at which the actual steering angle is determined to have been turned in reverse, and the remaining periods are defined as the phase P2. Further, the phase P1 is separated into the phase P1a and the phase P1b, and the phase P2 is separated into the phase P2a and the phase P2b. Furthermore, the weighting setting section 26 holds the weightings W1a, W1b, W2a, and W2b that respectively correspond to the phase P1a, the phase P1b, the phase P2a, and the phase P2b.

First, in the step S1, the target-position control unit 6 checks whether it is determined that the target steering angle is turned in reverse or not, on the basis of the result of the determination that is performed by the reverse-turning determination section 24 on the basis of the target steering angle calculated in the target-steering-angle calculation section 22. If it is determined that the target steering angle is turned in reverse, the processing proceeds to the step S2. Otherwise, the processing proceeds to the step S3.

In the step S2, the target-position control unit 6 determines whether the reverse turning of the target steering angle is from left to right. If the reverse turning of the target steering angle is from left to right, the processing proceeds to the step S4. Otherwise, i.e., if the reverse turning of the target steering angle is from right to left, the processing proceeds to the step S5.

In the step S3, on the basis of the temporal change of the target steering angle, i.e., the steering angular speed, the target-position control unit 6 determines whether it is rightward steering-turn or not. If it is rightward steering-turn, the processing proceeds to the step S6. Otherwise, i.e., if it is leftward steering-turn, the processing proceeds to the step S7.

In the steps S4 to S7, the target-position control unit 6 reads in the weightings W1a, W1b, W2a, and W2b from the weighting setting section 26, and then sets these weightings, which are applied to the difference between the target steering angle and the actual steering angle in the feedback control.

The step S4 is processing of setting the weighting W1a in the phase P1a. The step S5 is processing of setting the weighting W1b in the phase P1b. The step S6 is processing of setting the weighting W2a in the phase P2a. The step S7 is processing of setting the weighting W2b in the phase P2b. If the weighting W1a is set, the processing proceeds to the step S8. If the weighting w1b is set, the processing proceeds to the step S9. If the weighting W2a or the weighting W2b is set, the processing proceeds to the step S10.

In the step S8, from the result of the determination that is performed by the reverse-turning determination section 24 on the basis of the actual steering angle obtained by the angle sensor 12, the target-position control unit 6 checks whether it is determined that the actual steering angle is turned in reverse or not. If it is determined that the actual steering angle is turned in reverse, the processing proceeds to the step S6. Otherwise, the processing proceeds to the step S10.

The determination of the reverse turning of the actual steering angle in the step S8 refers to the determination of the reverse turning of the actual steering angle from left to right. Also in the step S8, if the reverse turning of the actual steering angle is not determined, it refers to the case where it is during the period of the phase P1a and the weighting W1a having been set in the step S4 is maintained.

In the step S9, from the result of the determination that is performed by the reverse-turning determination section 24 on the basis of the actual steering angle obtained by the angle sensor 12, the target-position control unit 6 checks whether it is determined that the actual steering angle is turned in reverse or not. If it is determined that the actual steering angle is turned in reverse, the processing proceeds to the step S7. Otherwise, the processing proceeds to the step S10.

The determination of the reverse turning of the actual steering angle in the step S9 refers to the determination of the reverse turning of the actual steering angle from right to left. Also in the step S9, if the reverse turning of the actual steering angle is not determined, it refers to the case where it is during the period of the phase P1b and the weighting W1b having been set in the step S5 is maintained.

In the step S10, the target-position control unit 6 calculates the control input (i.e., the target steering torque) to be outputted to the EPS 2 on the basis of any one of the weightings W1a, W1b, W2a, and W2b.

Thus, the target-position control unit 6 of the vehicle control apparatus 1 according to the embodiment of the present invention determines the target steering torque on the basis of the weighting having been set for each phase so as to perform the steering control of the EPS 2.

As described above, under the definitions that: the first phase P1 is a predetermined period including a short span immediately after determination (i.e., affirmation) of reverse turning of the steering; and the second phase P2 is an execution period of steering-turn without overlapping the first phase P1, the vehicle control apparatus 1 according to the present embodiment makes the weighting in the control of following the target position from the current position in the steering control during the first phase P1 larger than during the second phase P2.

Thus, the vehicle control apparatus 1 obtains the steering torque that significantly changes from left to right or from right to left at the time of reverse turning of the steering and is necessary for overcoming the hysteresis characteristic of the steering. In other words, as compared with the conventional steering control in which the weighting does not change between the second phase P2 and the first phase P1, the vehicle control apparatus 1 can significantly shorten the delay in the control of following the target position from the current position after reverse turning of the steering. Furthermore, the followability of the steering wheel rotating in conjunction with the steering control of the EPS 2 also improves by significantly shortening the delay in the follow-up control. Thus, the steering feeling of the driver who holds the steering wheel can be improved.

In addition, the vehicle control apparatus 1 according to the present embodiment performs the weighting in the control of following the target position from the current position in the steering control on the basis of the difference between the actual steering angle detected by the angle sensor 12 and the target steering angle, which is meant for performing the steering control and is calculated by the target-position control unit 6. In other words, the vehicle control apparatus 1 calculates the target steering angle from the target position and the current position, uses the target steering angle as a desired value, obtains the actual steering angle, and treats the actual steering angle as an output value. In this manner, the vehicle control apparatus 1 can readily perform the feedback control in the steering control.

Moreover, the weighting in the control of following the target position from the current position is performed with respect to the difference between the target steering angle and the actual steering angle in the feedback control. Thus, the vehicle control apparatus 1 can readily bring the followability from the current position to the target position in the steering control closer to a desired followability by simply changing the weighting during the feedback control.

In addition, the vehicle control apparatus 1 according to the present embodiment increases the weighting in the first phase P1 more as the steering angular speed becomes faster. In other words, when the steering torque required for overcoming the hysteresis characteristic of the steering increases due to increase in the steering angular speed at the time of reverse turning of the steering, the vehicle control apparatus 1 increases the steering torque by further increasing the weighting. This control enables the vehicle control apparatus 1 to suppress extension of the response delay at the time of reverse turning of the steering.

Additionally, the vehicle control apparatus 1 according to the present embodiment sets the first phase P1 as at least one of: a period from the target steering angle is determined to have been turned from left to right until the actual steering angle is determined to have been turned from left to right; and a period from the target steering angle is determined to have been turned from right to left until the actual steering angle is determined to have been turned from right to left. In other words, the weighting is made not to continue to increase after the reverse turning of the actual steering angle is determined at the end of the first phase P1. This control enables the vehicle control apparatus 1 to suppress excessive steering torque in the subsequent rightward or leftward steering-turn. Since excessive steering torque is not transmitted to the steering wheel, the vehicle control apparatus 1 can improve the steering feeling of the driver who holds the steering wheel.

Further, the vehicle control apparatus 1 according to the present embodiment lengthens the first phase P1 more as the steering angular speed becomes faster, and sets the first phase P1 to be equal to or shorter than at least one of: the period from the target steering angle is determined to have been turned from left to right until the actual steering angle is determined to have been turned from left to right; and the period from the target steering angle is determined to have been turned from right to left until the actual steering angle is determined to have been turned from right to left. In other words, in the first phase P1, the vehicle control apparatus 1 lengthens the period of maintaining the weighting more as the steering angular speed becomes faster, instead of increasing the weighting more as the steering angular speed becomes faster. In this manner, the vehicle control apparatus 1 continues to cause the EPS 2 to exert the steering torque, which is weighted more than in the second phase P2 in order to improve the followability of the actual steering angle with respect to the target steering angle, throughout the first phase P1, and consequently can improve the followability of the actual steering angle with respect to the target steering angle.

Moreover, the vehicle control apparatus 1 shortens the period of the first phase P1 so as to adjust the period during which the steering torque weighted more than in the second phase P2 is generated. In this manner, the vehicle control apparatus 1 can perform the steering control of the EPS 2 while reflecting the delay in the follow-up control of the actual steering angle with respect to the target steering angle. In other words, ending the first phase P1 early and shifting to the second phase P2 to change the weighting enables more appropriate weighting at more appropriate timing and can improve the driver's steering feeling. Thus, not only the followability of the actual steering angle with respect to the target steering angle but also the driver's steering feeling can be improved by setting the first phase P1 that maintains the weighting as a period equal to or shorter than a predetermined length on the basis of relationship between the steering angular speed and the first phase P1.

Furthermore, the vehicle control apparatus 1 according to the present embodiment differentiate the weighting in the second phase P2 between rightward steering-turn and leftward steering-turn. Hence, even if there is variation in responsiveness between rightward steering-turning and leftward steering-turn, the vehicle control apparatus 1 can allow the EPS 2 to exert differently weighted steering torques between rightward and leftward steering-turns. This enables the vehicle control apparatus 1 to improve the variation in responsiveness between rightward and leftward steering-turn. Thus, the vehicle control apparatus 1 can improve the driver's steering feeling by reducing variation in responsiveness.

In addition, the vehicle control apparatus 1 according to the present embodiment determines the weighting in the second phase P2 by calculating the predetermined ratio from the difference between the target steering angle and the actual steering angle. This predetermined ratio becomes a value larger than 1 when the difference between the target steering angle and the actual steering angle becomes too large and improvement in followability is required. The weighting becomes larger by multiplying the currently set weighting in the second phase P2 by this predetermined ratio to create a new weighting. Hence, the vehicle control apparatus 1 can increase the steering torque in order to improve the followability.

Furthermore, the vehicle control apparatus 1 sets different weighting in the second phase P2 for rightward steering-turn and leftward steering-turn. In other words, in the vehicle control apparatus 1, the weighting to be assigned in the second phase P2 is different between rightward steering-turn and leftward steering-turn. In this manner, the vehicle control apparatus 1 makes the difference between the target steering angle and the actual steering angle almost the same between rightward steering-turn and leftward steering-turn, and thereby, further improves the left-right balance of responsiveness. Since the left-right balance of responsiveness is improved, the vehicle control apparatus 1 can improve the driver's steering feeling during rightward steering-turn and leftward steering-turn.

According to the vehicle control apparatus 1 of the present embodiment as described above, the response delay in reverse turning of the steering in the steering control can be shortened and the steering feeling can be improved.

While certain embodiments have been described, these embodiments have been presented by way of example only, and are not intended to limit the scope of the claims. Indeed, the novel embodiments described herein may be embodied in a variety of other forms. Furthermore, various omissions, substitutions and changes in the form of the embodiments described herein may be made without departing from the scope of the claims. The accompanying claims and their equivalents are intended to cover such forms or modifications as would fall within the scope of the claims.

### REFERENCE SIGNS LIST

- 1: vehicle control apparatus
- 2: electric power steering (EPS)
- 4: current-position acquisition unit
- 6: target-position control unit
- 8: in-vehicle network
- 10: motor
- 12: angle sensor
- 14: EPS control unit
- 16: camera
- 18: GNSS
- 20: map information
- 22: target-steering-angle calculation section
- 24: reverse-turning determination section
- 26: weighting setting section

## Claims

1. A vehicle control apparatus (1) comprising:
an electric power steering (2) configured to support steering of a vehicle and be able to perform torque control;
a current-position acquisition unit (4) configured to acquire a current position of the vehicle in a traffic lane where the vehicle is currently traveling; and
a target-position control unit (6) configured to perform steering control of the electric power steering (2) in such a manner that the vehicle is caused to run from the current position to a target position and maintains a current traffic lane,
**characterised in that**,
by definitions that a first phase (P1) is a predetermined period including a span immediately after reverse turning of steering is determined in the steering control and a second phase (P2) is a period during which steering-turn is performed and does not overlap the first phase (P1), weighting in follow-up control from the current position to the target position is larger in the first phase (P1) than in the second phase (P2).

2. The vehicle control apparatus (1) according to claim 1, further comprising an angle sensor (12) configured to detect an actual steering angle, wherein:
the target-position control unit (6) is configured to
calculate a target steering angle for performing the steering control and
cause the electric power steering (2) to perform torque control in such a manner that the target steering angle is achieved;
the steering control is feedback control; and
the weighting is based on a difference between the target steering angle and the actual steering angle in the feedback control.

3. The vehicle control apparatus (1) according to claim 1 or claim 2, wherein the weighting in the first phase (P1) increases more as a steering angular speed becomes faster.

4. The vehicle control apparatus (1) according to claim 2, wherein the first phase (P1) is at least one of:
a period from a time at which the target steering angle is determined to have been turned from left to right until a time at which the actual steering angle is determined to have been turned from left to right; and
a period from a time at which the target steering angle is determined to have been turned from right to left until a time at which the actual steering angle is determined to have been turned from right to left.

5. The vehicle control apparatus (1) according to claim 2, wherein the first phase (P1) is longer as a steering angular speed is faster, and is equal to or shorter than at least one of:
a period from a time at which the target steering angle is determined to have been turned from left to right until a time at which the actual steering angle is determined to have been turned from left to right; and
a period from a time at which the target steering angle is determined to have been turned from right to left until a time at which the actual steering angle is determined to have been turned from right to left.

6. The vehicle control apparatus (1) according to any one of claim 2, claim 4, and claim 5, wherein the weighting in the second phase (P2) is different between rightward steering-turn and leftward steering-turn.

7. The vehicle control apparatus (1) according to claim 6, wherein the weighting in the second phase (P2) is determined by calculating a predetermined ratio from a difference between the target steering angle and the actual steering angle.

## Patentansprüche

1. Fahrzeugsteuervorrichtung (1), umfassend:
eine elektrische Servolenkung (2), welche dazu eingerichtet ist, ein Lenken eines Fahrzeugs zu unterstützen und in der Lage zu sein, eine Drehmomentsteuerung durchzuführen;
eine Akquirierungseinheit (4) einer aktuellen Position, welche dazu eingerichtet ist, eine aktuelle Position des Fahrzeugs in einer Fahrspur zu akquirieren, in welcher das Fahrzeug aktuell fährt; und
eine Steuereinheit (6) einer Zielposition, welche dazu eingerichtet ist, eine Lenksteuerung der elektrischen Servolenkung (2) in einer derartigen Weise durchzuführen, dass das Fahrzeug dazu gebracht wird, von der aktuellen Position zu einer Zielposition zu fahren und in der aktuellen Fahrspur zu verbleiben,
**dadurch gekennzeichnet, dass**, durch Definitionen, dass eine erste Phase (P1) eine vorbestimmte Periode ist, welche einen Abstand umfasst, unmittelbar nachdem ein Zurückdrehen eines Lenkens in der Lenksteuerung bestimmt wird, und eine zweite Phase (P2) eine Periode ist, während welcher eine Lenkdrehung durchgeführt wird und welche nicht mit der erste Periode (P1) überlappt, ein Gewichten einer Folgesteuerung von der aktuellen Position zu der Zielposition in der ersten Phase (P1) größer als in der zweiten Phase (P2) ist.

2. Fahrzeugsteuervorrichtung (1) nach Anspruch 1, welche ferner einen Winkelsensor (12) umfasst, welcher dazu eingerichtet ist, einen wirklichen Lenkwinkel zu detektieren, wobei:
die Steuereinheit (6) einer Zielposition eingerichtet ist, zum
Berechnen eines Ziellenkwinkels zum Durchführen der Lenksteuerung und
Veranlassen der elektrischen Servolenkung (2), eine Drehmomentsteuerung in einer derartigen Weise durchzuführen, dass der Ziellenkwinkel erreicht wird;
die Lenksteuerung eine Rückkopplungssteuerung ist; und
das Gewichten auf einer Differenz zwischen dem Ziellenkwinkel und dem wirklichen Lenkwinkel in der Rückkopplungssteuerung basiert.

3. Fahrzeugsteuervorrichtung (1) nach Anspruch 1 oder Anspruch 2, wobei sich das Gewichten in der ersten Phase (P1) mehr erhöht, wenn eine Lenkwinkelgeschwindigkeit schneller wird.

4. Fahrzeugsteuervorrichtung (1) nach Anspruch 2, wobei die erste Phase (P1) wenigstens eines ist, aus:
einer Periode von einer Zeit, zu welcher der Ziellenkwinkel bestimmt wird, von links nach rechts gedreht worden zu sein, bis zu einer Zeit, zu welcher der wirkliche Lenkwinkel bestimmt wird, von links nach rechts gedreht worden zu sein; und
einer Periode von einer Zeit, zu welcher der Ziellenkwinkel bestimmt wird, von rechts nach links gedreht worden zu sein, bis zu einer Zeit, zu welcher der wirkliche Lenkwinkel bestimmt wird, von rechts nach links gedreht worden zu sein.

5. Fahrzeugsteuervorrichtung (1) nach Anspruch 2, wobei die erste Phase (P1) länger ist, wenn eine Lenkwinkelgeschwindigkeit schneller ist und gleich oder kürzer ist als wenigstens eines, aus:
einer Periode von einer Zeit, zu welcher der Ziellenkwinkel bestimmt wird, von links nach rechts gedreht worden zu sein, bis zu einer Zeit, zu welcher der wirkliche Lenkwinkel bestimmt wird, von links nach rechts gedreht worden zu sein; und
einer Periode von einer Zeit, zu welcher der Ziellenkwinkel bestimmt wird, von rechts nach links gedreht worden zu sein, bis zu einer Zeit, zu welcher der wirkliche Lenkwinkel bestimmt wird, von rechts nach links gedreht worden zu sein.

6. Fahrzeugsteuervorrichtung (1) nach einem von Anspruch 2, Anspruch 4 und Anspruch 5, wobei das Gewichten in der zweiten Phase (P2) unterschiedlich ist zwischen einer Lenkdrehung nach rechts und einer Lenkdrehung nach links.

7. Fahrzeugsteuervorrichtung (1) nach Anspruch 6, wobei das Gewichten in der zweiten Phase (P2) durch ein Berechnen eines vorbestimmten Verhältnisses von einem Unterschied zwischen einem Ziellenkwinkel und einem wirklichen Lenkwinkel bestimmt wird.

## Revendications

1. Appareil de commande de véhicule (1) comprenant :
une direction assistée électrique (2) configurée pour faciliter la direction d'un véhicule et pouvoir réaliser une commande de couple ;
une unité d'acquisition de position courante (4) configurée pour acquérir une position courante du véhicule dans une voie de circulation où le véhicule roule à ce moment ; et
une unité de commande de position cible (6) configurée pour réaliser une commande de direction de la direction assistée électrique (2) de manière à ce que le véhicule soit amené à se déplacer de la position courante à une position cible et conserve une voie de circulation courante,
**caractérisé en ce que**, par des définitions selon lesquelles une première phase (P1) est une période prédéterminée comportant un intervalle immédiatement après qu'une rotation inverse de direction a été déterminée dans la commande de direction et une seconde phase (P2) est une période durant laquelle un tour de direction est réalisé et ne chevauche pas la première phase (P1), une pondération de commande de suivi à partir de la position courante jusqu'à la position cible est plus grande dans la première phase (P1) que dans la seconde phase (P2).

2. Appareil de commande de véhicule (1) selon la revendication 1, comprenant en outre un capteur d'angle (12) configuré pour détecter un angle de braquage réel, dans lequel :
l'unité de commande de position cible (6) est configurée pour
calculer un angle de braquage cible pour réaliser la commande de direction et
amener la direction assistée électrique (2) à réaliser une commande de couple de manière à ce que l'angle de braquage cible soit atteint ;
la commande de direction est une commande de rétroaction ; et
la pondération est basée sur une différence entre l'angle de braquage cible et l'angle de braquage réel dans la commande de rétroaction.

3. Appareil de commande de véhicule (1) selon la revendication 1 ou la revendication 2, dans lequel la pondération dans la première phase (P1) augmente davantage au fur et à mesure qu'une vitesse angulaire de braquage devient plus rapide.

4. Appareil de commande de véhicule (1) selon la revendication 2, dans lequel la première phase (P1) est au moins une parmi :
une période à partir d'un moment où l'angle de braquage cible est déterminé comme ayant été tourné de gauche à droite jusqu'à un moment où l'angle de braquage réel est déterminé comme ayant été tourné de gauche à droite ; et
une période à partir d'un moment où l'angle de braquage cible est déterminé comme ayant été tourné de droite à gauche jusqu'à un moment où l'angle de braquage réel est déterminé comme ayant été tourné de droite à gauche.

5. Appareil de commande de véhicule (1) selon la revendication 2, dans lequel la première phase (P1) est plus longue au fur et à mesure qu'une vitesse angulaire de braquage est plus rapide, et est égale à ou plus courte qu'au moins une parmi :
une période à partir d'un moment où l'angle de braquage cible est déterminé comme ayant été tourné de gauche à droite jusqu'à un moment où l'angle de braquage réel est déterminé comme ayant été tourné de gauche à droite ; et
une période à partir d'un moment où l'angle de braquage cible est déterminé comme ayant été tourné de droite à gauche jusqu'à un moment où l'angle de braquage réel est déterminé comme ayant été tourné de droite à gauche.

6. Appareil de commande de véhicule (1) selon l'une quelconque de la revendication 2, de la revendication 4, et de la revendication 5, dans lequel la pondération dans la seconde phase (P2) est différente entre un tour de direction à droite et un tour de direction à gauche.

7. Appareil de commande de véhicule (1) selon la revendication 6, dans lequel la pondération dans la seconde phase (P2) est déterminée en calculant un rapport prédéterminé à partir d'une différence entre l'angle de braquage cible et l'angle de braquage réel.
